(19) **Europäisches Patentamt**

**European Patent Office**

**Office européen des brevets**

(11) **EP 1 307 504 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(51) Int Cl.$^7$: **C08K 5/14**, C08L 21/02, C08L 19/00

(21) Anmeldenummer: **01956527.4**

(22) Anmeldetag: **11.07.2001**

(86) Internationale Anmeldenummer:
**PCT/EP2001/007992**

(87) Internationale Veröffentlichungsnummer:
**WO 2002/008328 (31.01.2002 Gazette 2002/05)**

(54) **VERFAHREN ZUR HERSTELLUNG VERNETZTER KAUTSCHUKPARTIKEL**

METHOD FOR PRODUCING CROSS-LINKED RUBBER PARTICLES

PROCEDE DE PRODUCTION DE PARTICULES DE CAOUTCHOUC RETICULEES

(84) Benannte Vertragsstaaten:
**DE FR GB IT**

(30) Priorität: **21.07.2000 DE 10035493**

(43) Veröffentlichungstag der Anmeldung:
**07.05.2003 Patentblatt 2003/19**

(73) Patentinhaber: **LANXESS Deutschland GmbH**
**51369 Leverkusen (DE)**

(72) Erfinder: **OBRECHT, Werner**
**47447 Moers (DE)**

(56) Entgegenhaltungen:
**EP-A- 0 854 170          EP-A- 1 020 492**
**GB-A- 867 916          GB-A- 880 739**
**US-A- 5 395 891**

**Beschreibung**

Die Erfindung betrifft ein verbessertes Verfahren zur Herstellung vernetzter Kautschukpartikel, die zur partiellen oder vollständigen Substitution konventioneller Füllstoffe, wie Ruß oder Kieselsäure, in Kautschukvulkanisaten geeignet sind.

Die Verwendung der Kautschukgele in Vulkanisaten ist beispielsweise beschrieben in US 5 395 891 (BR-Gele) oder in EP-A 854 170 (SBR-Gele).

Die übliche Verfahrensweise zur Herstellung der vernetzten Kautschukpartikel (auch Kautschukgele oder Mikrogele bzw. Gele genannt), besteht in der Umsetzung von Polymerdispersionen (Polymer dispergiert in Wasser) insbesondere von Kautschukdispersionen (Kautschuklatices), mit einem Peroxid, wobei das Peroxid zum Kautschuklatex gegeben und bei höherer Temperatur entsprechend seiner Halbwertszeit umgesetzt wird. Hierbei wird der dispergierte Kautschuk vernetzt. Um Nebenreaktionen des Peroxids mit Sauerstoff zu vermeiden, wird die Umsetzung entweder unter einer Inertgasatmosphäre durchgeführt oder das Reaktionsgemisch wird durch wiederholte Inertgasbeaufschlagung/Entspannungs-Zyklen inertisiert.

In US 5 395 891, Beispiele: BR gel A1, wird nach der Zugabe von Dicumylperoxid der Autoklav mit 8 bar Stickstoffdruck beaufschlagt. Die Reaktion wird bei 150°C durchgeführt. Hierbei steigt der Druck auf 15,0 bar. Aus diesem Grund muss ein Reaktor ausgewählt werden, der diesem Druck standhält.

In EP-A 0 854 170, Beispiele 2, 3 und 4, wird nach der Zugabe des Dicumylperoxids der Reaktion mit 5 bar Stickstoffdruck beaufschlagt und daraufhin entspannt. Die Prozedur wird 3 mal wiederholt. Vorteilhaft bei dieser Vorgehensweise ist, dass bei der Durchführung der Reaktion maximal Drücke von nun 5 bar auftreten. Die dreimalige Beaufschlagung und Entspannung mit Stickstoff ist aber sehr aufwendig und daher kostenträchtig.

Es bestand daher die Aufgabe, die Vorgehensweise so zu vereinfachen, dass einerseits die bei der Reaktion auftretenden Drucke möglichst niedrig bleiben, so dass Autoklaven mit einer Zulassung <6 bar verwendet werden können, und andererseits das aufwändige Handling mit Stickstoff vermieden werden kann.

Diese Aufgabe wird dadurch gelöst, dass die Umsetzung der Kautschuklatices mit organischen Peroxiden ohne Inertisierung durchgeführt wird. Unter diesen Bedingungen treten bei 150°C Drücke von maximal 5 bar auf. Die bei dieser Vorgehensweise erhaltenen Kautschukgele unterscheiden sich weder bezüglich ihrer analytischen Daten noch in ihrer Funktionsfähigkeit in hieraus hergestellten Kautschukvulkanisaten von Kautschukgelen, die nach dem bisherigen Stand der Technik hergestellt werden.

Gegenstand der vorliegenden Erfindung ist daher ein Verfahren zur Herstellung vernetzter Kautschukpartikel durch Umsetzung von Kautschuklatices mit vernetzend wirkenden Chemikalien, dadurch gekennzeichnet, dass das Reaktionsgemisch vor der Durchführung der Vernetzungsreaktion nicht inertisiert wird.

Wie zuvor erwähnt, ist es für das erfindungsgemäße Verfahren von Bedeutung, dass keine inertisierenden Maßnahmen vor der Vernetzungsreaktion bei dem mit vernetzend wirkenden Chemikalien zu behandelnden Kautschuklatex vorgenommen werden. Das bedeutet, dass der Luftsauerstoff nicht durch bekannte Inertisierungsmaßnahmen, wie Spülen und Arbeiten unter Stickstoff, entfernt wird.

Die Vernetzung von Kautschuklatices nach dem erfindungsgemäßen Verfahren in Gegenwart von organischen Peroxiden wird ansonsten unter den bekannten und üblichen Bedingungen durchgeführt (US-A 5 395 891; EP-A 0 854 170).

Für die Vernetzung der Kautschuke werden die üblichen, vernetzend wirkenden Chemikalien, wie organische Peroxide, z.B. Dicumylperoxid, t-Butylcumylperoxid, Bis-(t-butyl-peroxy-isopropyl)benzol, Di-t-butylperoxid, 2,5-Dimethylhexan-2,5-dihydro-peroxid, 2,5-Dimethylhexin-3,2,5-di-hydroperoxid, Dibenzoylperoxid, Bis-(2,4-dichlorobenzoyl) peroxid und/oder t-Butylperbenzoat, sowie organische Azoverbindungen, wie Azo-bis-isobutyronitril und/oder Azobiscyclohexannitril eingesetzt. Bevorzugt ist der Einsatz von Dicumylperoxid.

Die optimale Temperatur zur Durchführung der Vernetzung ist naturgemäß von der Reaktivität des Vernetzers abhängig und kann bei Temperaturen von Raumtemperatur (ca. 20°C) bis ca. 180°C gegebenenfalls unter erhöhtem Druck (1 bis 5 bar) durchgeführt werden (siehe hierzu Houben-Weyl, Methoden der organischen Chemie, 4. Auflage, Band 14/2, Seite 848).

Das erfindungsgemäße Verfahren eignet sich für die Vernetzung wässriger Kautschukdispersionen und ist ebenfalls für Kautschuklatices, die durch Emulsionspolymerisation hergestellt werden, für Kautschukdispersionen, die durch Umdispergierung sogenannter Lösungskautschuke erhalten werden, sowie für natürlich vorkommende Latices, wie Naturkautschuklatex, geeignet.

Die Teilchendurchmesser der zur Vernetzung eingesetzten Polymerisate liegen im Bereich 5 bis 10 000 nm. Bevorzugt ist ein Bereich von 20 bis 600 nm (DVN-Wert nach DIN 53 206).

Die Umsetzung der vernetzend wirkenden Chemikalien mit dem Kautschuklatex bzw. der Kautschukdispersion ist dadurch erkennbar, dass die Polymerdichte, der Gelgehalt und die Glastemperatur mit steigendem Vernetzungsgrad zunehmen. Der Quellungsindex nimmt dagegen mit steigender Vernetzung ab.

Die Glastemperaturen der eingesetzten und vernetzten Kautschuke werden mittels DSC (Differential Scanning Calorimetry) bestimmt (z.B. Kalorimeter Pyris DSC-7 der Fa. Perkin-Elmer). Für die Bestimmung der Glastemperaturen werden 11,6±0,3 mg Substanz in Normalkapseln eingesetzt. Man führt zwei Aufheizungen von jeweils -100°C bis +150°C bei einer Heizrate von 20K/min und einer Abkühlrate von 320K/min mit Stickstoffspülung durch. Die Glastemperaturen werden die bei der 2. DSC-Aufheizung bestimmt. Durch die Vernetzung nehmen die Glastemperaturen zu. Üblich sind Zunahmen der Glastemperaturen um 5 bis 50°C.

Gelgehalt und Quellungsindex der erhaltenen Kautschukgele werden an einer ausgefällten und getrockneten Polymerprobe dadurch ermittelt, dass man 250 mg Gel in 25 ml eines geeigneten Lösungsmittels, z.B. Toluol, 24 Stunden unter Schütteln quillt. Das Gel wird bei 20 000 Upm abzentrifugiert und feucht gewogen, anschließend bei 70°C bis zur Gewichtskonstanz getrocknet und nochmals gewogen, anschließend bei 70°C bis zur Gewichtskonstanz getrocknet und nochmals gewogen. Der Gelgehalt wird aus der Menge des getrockneten Polymers, bezogen auf das eingesetzte Polymer, berechnet und in Gew.-% angegeben. Die Gelgehalte der vernetzten Kautschukpartikel liegen üblicherweise bei Werten >50 Gew.-%.

Der Quellungsindex wird aus dem Gewicht des lösungsmittelhaltigen Gels (nach Zentrifugation mit 20 000 Upm) und dem Gewicht des trockenen Gels wie folgt berechnet:

$$Qi = \frac{\text{Gewicht des feuchten Gels}}{\text{Trockengewicht des Gels}}$$

Die Quellungsindizes der vernetzten Polymeren ($Q_i$) in Toluol betragen 1 bis 50, vorzugsweise 1 bis 25.

Ist der Latex bei der Vernetzung ausreichend z.B. mit Emulgatoren stabilisiert, so ändert sich die Teilchengrößenverteilung bei der Umsetzung kaum. Ist der Latex nicht ausreichend stabilisiert, so kann es bei der Umsetzung zu Anbackungen an der Reaktorwand, zur Bildung von Stippen und auch zu der Koagulation des gesamten Reaktionsansatzes kommen. Ein Grund für Latexinstabilitäten bei der Reaktion ist zum Beispiel, dass der pH während der Reaktion abfällt und dadurch Emulgatoren auf Carbonsäurebasis unwirksam werden. In derartigen Fällen kann beispielsweise dadurch Abhilfe geschaffen werden, dass vor der Durchführung der Reaktion durch Zugabe einer ausreichenden Menge an Alkali eine Alkalireserve geschaffen wird, oder dass der Latex-pH während der Reaktion durch Zupumpen von Alkali konstant gehalten wird. Eine andere Möglichkeit zur Stabilisierung des Latex besteht in der Zugabe geeigneter Emugatoren entweder vor oder während der Durchführung der Reaktion.

Nach dem erfindungsgemäßen Verfahren können Kautschukparikel auf Basis von Polybutadien (BR), Styrol-Butadien-Copolymerisate (SBR), Naturkautschuk (NR), Nitrilkautschuk (NBR), Polyisopren (IR), sowie Polychloropren (CR) hergestellt werden.

Die erfindungsgemäß hergestellten vernetzten Kautschukpartikel werden in üblicher Weise stabilisiert, koaguliert und getrocknet. Bei der Isolierung aus der wässrigen Dispersion werden sie entweder in reiner Form oder nach Zugabe eines unvernetzten Kautschuklatex als Masterbatch isoliert. Üblich ist die Herstellung von Masterbatches mit Naturkautschuk, mit Styrol/Butadien-Kautschuk, mit Nitrilkautschuk und mit Polychloropren.

Für die Verwendung als polymere Füllstoffe in Kautschuken und Thermoplasten werden die vernetzten Kautschukpartikel mit den üblichen Mischungsbestandteilen compoundiert und vulkanisiert.

Die erfindungsgemäß hergestellten vernetzten Kautschukpartikel auf Basis der genannten Kautschuke können zur Herstellung von Kautschukvulkanisaten, die wiederum zur Herstellung der verschiedensten Kautschukformkörper dienen, eingesetzt werden.

**Beispiele:**

Aus Ausgangsprodukt wird ein Polybutadienlatex wie in US 5 395 891 beschrieben, eingesetzt. Charakteristische Daten dieses Latex finden sich in Tabelle 1 unter Bezeichnung "Ausgangs-BR". Vor der Umsetzung wird die Feststoffkonzentration des Ausgangs-BR durch verdünnen mit entionisiertem Wasser auf 30 Gew.-% eingestellt und für die Durchführung der nachfolgenden 4 Vernetzungen mit Dicumylperoxid aliquotiert. Die Umsetzung mit Dicumylperoxid (jeweils 1 phr, bezogen auf Polybutadienfeststoff) erfolgt im erfindungsgemäßen Beispiel ohne Inertisierung mit Stickstoff. Die Vergleichsbeispiele 1 und 2 werden gemäß EP-A 854 170 A1, Beispiel 1 durchgeführt (dreimalige Stickstoff-Aufdrück/Entspannungs-Zyklen). Vergleichsbeispiel 3 wird entsprechend US 5 395 891, BR gel A1 durchgeführt. Charakteristische Reaktionsbedingungen sowie Daten der Kautschukpartikel sind in folgender Tabelle zusammengefasst:

| Produkt | DCP | Reaktionsführung | Maximaldruck | Latex-pH | Durchmesser | | | Dichte | Gelgehalt | Qi | Tg |
|---|---|---|---|---|---|---|---|---|---|---|---|
| | | | | | $d_{10}$ | $d_{50}$ | $d_{80}$ | | | | |
| | (phr) | | (bar) | | (nm) | (nm) | (nm) | $(g/cm^3)$ | (%) | | (°C) |
| Ausgangs BR | 0 | | | | 101 | 118 | 126 | 0,9019 | 90,9 | 13,7 | -85 |
| Produkt A* | 1,0 | ohne Inertisierung | 5 | 10,8 | 106 | 126 | 139 | 0,9332 | 95,2 | 7,3 | -72 |
| Produkt B1 | 1,0 | mit Stickstoffspülung EP 854170 | 5 | 10,8 | 96 | 112 | 128 | 0,9205 | 95,9 | 7,3 | -76 |
| Produkt B2 | 1,0 | mit Stickstoffspülung EP 854170 | 5 | 10,8 | 108 | 126 | 137 | 0,9365 | 95,2 | 8,2 | -69 |
| Produkt B3 | 1,0 | mit Stickstoff US 5395891 | 15,0 | 10,8 | 98 | 115 | 124 | 0,9365 | 94,8 | 8,1 | -69 |

*erfindungsgemäßes Herstellungsverfahren: ohne Entfernung des Luftsauerstoffs vor der Vernetzungsreaktion.

Es wird gezeigt, dass sich die analytischen Daten des erfindungsgemäß vernetzten Kautschuklatex sowie des hieraus isolierten "trockenen" Kautschukgels nicht von den Produkten unterscheiden, die entsprechend des Standes der Technik hergestellt werden.

**Compoundherstellung, Vulkanisation und Ergebnisse**

Auf der Basis der oben beschriebenen BR-Gele werden Kautschukcompounds hergestellt und vulkanisiert. Es werden die Eigenschaften der entsprechenden Vulkanisate bestimmt: In dieser Versuchsserie wird gezeigt, dass das erfindungsgemäß hergestellte Kautschukgel sich von Kautschukgelen, die nach dem Stand der Technik hergestellt sind, weder in den Mischungs- noch in den Vulkanisateigenschaften signifikant unterscheiden.

In einem Laborinnenmischer werden gemäß nachfolgender Rezeptur unterschiedliche Compounds (Angabe in phr) auf der Basis der verschiedenen BR-Gele hergestellt. Die Mischungskomponenten werden in der in der Tabelle angegebenen Reihenfolge gemischt:

| Mischungs-Nr.: | 1* | 2 | 3 | 4 |
|---|---|---|---|---|
| Naturkautschuk, vormastiziert [1] | 60 | 60 | 60 | 60 |
| Produkt A | 60 | | | |
| Produkt B1 | | 60 | | |
| Produkt B2 | | | 60 | |
| Produkt B3 | | | | 60 |
| Buna CB 65 [2] | 40 | 40 | 40 | 40 |
| Ruß N 330 | 2 | 2 | 2 | 2 |
| Aktive Kieselsäure[3] | 20 | 20 | 20 | 20 |
| Bis(tri-ethoxy-silyl-propyldisulfan)[4] | 5 | 5 | 5 | 5 |
| Koresin [5] | 4 | 4 | 4 | 4 |
| Renopol L [6] | 5 | 5 | 5 | 5 |
| Zinkoxid | 5 | 5 | 5 | 5 |
| Stearinsäure | 2 | 2 | 2 | 2 |
| TMQ[7] | 1,5 | 1,5 | 1,5 | 1,5 |
| 6PPD[8] | 2,5 | 2,5 | 2,5 | 2,5 |
| Schwefel | 5 | 5 | 5 | 5 |
| CBS[9] | 2 | 2 | 2 | 2 |
| KA 9188[10] | 3 | 3 | 3 | 3 |

*Compound mit erfindungsgemäß hergestelltem BR-Gel

1) = SMR 5 (Standard Malaysian Rubber)

2) = sternförmig verzweigter Polybutadienkautschuk der Bayer AG

3) = Vulkasil ® S der Bayer AG

4) = Si 69® (Degussa AG)

5) = Kondensationsprodukt aus t-Butylphenol und Acetylen

6) = Weichmacher auf Mineralölbasis

7) = 2,2,4-Trimethyl-1,2-dihydrochinolin (Vulkanox® HS der Bayer AG)

8) = N-1,3-Dimethylbutyl-N'-phenyl-p-phenylendiamin (Vulkanox® 4020 NA der Bayer AG)

9) = N-Cyclohexyl-2-benzthiazylsulfenamid (Vulkacit® CZ der Bayer AG

10) = Versuchsprodukt KA 9188 der Bayer AG (Vulcuren®)

Zur Charakterisierung der Eigenschaften des unvernetzten Compounds werden folgende Messgrößen herangezogen: Mooneyviskosität ML 1+4 (100°C); Mooneyrelaxation MR 30 und der Mooneyscorch (MS) bei 130°C.

| Mischungs-Nr.: | 1* | 2 | 3 | 4 |
|---|---|---|---|---|
| ML 1 + 4 (100°C) [ME] | 49,8 | 49,9 | 51,0 | 51,5 |
| MR30[%] | 8,5 | 8,7 | 8,6 | 8,6 |
| MS (130°C) | 21,5 | 22,8 | 22,5 | 22,6 |

Auf der Basis o.g. Compounds werden nach 15 Min. Vulkanisationszeit bei 165°C folgende Prüfergebnisse erhalten:

| Mischungs-Nr.: | 1* | 2 | 3 | 4 |
|---|---|---|---|---|
| Zugfestigkeit [MPa] | 2,2 | 2,0 | 2,5 | 2,4 |
| Bruchdehnung [%] | 61 | 68 | 58 | 56 |
| Spannungswert/50% [MPa] | 2,0 | 2,0 | 2,1 | 2,1 |
| Härte Shore A, 23°C | 68 | 66 | 69 | 70 |
| Härte Shore A, 70°C | 69 | 67 | 70 | 69 |
| Rückprallelastizität, 23°C [%] | 75 | 78 | 73 | 72 |
| Rückprallelastizität, 70°C [%] | 82 | 84 | 80 | 81 |
| Goodrich Flexometer $\Delta$ T [°C] | 1,8 | 1,0 | 2,1 | 2,3 |
| Goodrich Flexometer T [°C] | 103,3 | 101,5 | 104,0 | 103,8 |
| tan $\delta$ (60°C) | 0,012 | 0,010 | 0,013 | 0,014 |

## Patentansprüche

1.  Verfahren zur Herstellung vernetzter Kautschukpartikel durch Umsetzung von Kautschuklatices mit vernetzend wirkenden Chemikalien, **dadurch gekennzeichnet, dass** das Reaktionsgemisch vor der Durchführung der Vernetzungsreaktion nicht inertisiert wird.

2.  Verfahren nach Anspruch 1, **dadurch gekennzeichnet, dass** Kautschukpartikel auf Basis BR, SBR, NR, NBR, IR und CR hergestellt werden.

3.  Verfahren nach Anspruch 1, **dadurch gekennzeichnet, dass** als vernetzend wirkende Chemikalien organische Peroxide, insbesondere Dicumylperoxid, eingesetzt wird.

4.  Verwendung der nach Anspruch 1 hergestellten vernetzten Kautschukpartikel zur Herstellung von Kautschukvulkanisaten, die wiederum zur Herstellung der verschiedensten Kautschukformkörper dienen, sowie als polymere Füllstoffe in Kautschuken und Thermoplasten.

## Claims

1.  Process for production of cross-linked rubber particles by conversion of rubber latices with cross-linking agents, **characterised in that** the reaction mix is not inertised before the implementation of the cross-linking reaction.

2.  Process according to Claim 1, **characterised in that** rubber particles are produced on the basis of BR, SBR, NR, NBR, IR and CR.

3.  Process according to Claim 1, **characterised in that** organic peroxides, particularly dicumyl peroxide, are used as cross-linking agents.

4.  Use of the cross-linked rubber particles produced in accordance with Claim 1 for the production of rubber vulcanisates, which are then used for the production of extremely diverse formed rubber bodies and as polymer fillers in rubbers and thermoplastics.

**Revendications**

1. Procédé de production de particules de caoutchouc réticulées par conversion des latex de caoutchouc avec des produits chimiques ayant une action réticulante, **caractérisé en ce que** le mélange réactionnel n'est pas inertisé avant la réalisation de la réaction de réticulation.

2. Procédé selon la revendication 1, **caractérisé en ce que** les particules de caoutchouc sont fabriquées à base de NR, SBR, NR, NBR, IR et CR.

3. Procédé selon la revendication 1, **caractérisé en ce que** l'on utilise, à titre de produits chimiques ayant une action réticulante, des peroxydes organiques, en particulier du peroxyde de dicumyle.

4. Utilisation des particules de caoutchouc réticulées, fabriquées selon la revendication 1, pour fabriquer des caoutchoucs vulcanisés, qui servent à nouveau à fabriquer les corps moulés en caoutchouc les plus divers, ainsi que de charges polymères dans des caoutchoucs et thermoplastiques.